(19)

**Europäisches Patentamt**
**European Patent Office**
**Office européen des brevets**

(11) **EP 3 543 623 A1**

(12) **EUROPEAN PATENT APPLICATION**

(43) Date of publication:
**25.09.2019 Bulletin 2019/39**

(51) Int Cl.:
**F24S 30/20** (2018.01)      **F24S 25/10** (2018.01)

(21) Application number: **19154490.7**

(22) Date of filing: **30.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2018 US 201815927023**

(71) Applicants:
• **Abraham, Manoj**
  **Foster City, CA 94404 (US)**
• **Abraham, Zachary Thomas**
  **Foster City, CA 94404 (US)**

• **Abraham, Zion George**
  **Foster City, CA 94404 (US)**

(72) Inventors:
• **Abraham, Manoj**
  **Foster City, CA 94404 (US)**
• **Abraham, Zachary Thomas**
  **Foster City, CA 94404 (US)**
• **Abraham, Zion George**
  **Foster City, CA 94404 (US)**

(74) Representative: **Global IP Europe**
**Patentanwaltskanzlei**
**Pfarrstraße 14**
**80538 München (DE)**

(54) **SOLAR PANEL ARRANGEMENT**

(57)      Disclosed is a solar panel arrangement (500). The solar panel arrangement (500) comprises a plurality of solar panels (502, 504, 506) operable to be stacked vertically. Each solar panel of the plurality of solar panels (502, 504, 506) is vertically spaced apart from each adjacent solar panel by a predetermined distance. The predetermined distance is based on a solar elevation angle to be incident on the plurality of solar panels and lengths of each solar panel of the plurality of solar panels (502, 504, 506). The solar panel arrangement (500) further comprises a coupling mechanism (510) operable to support the plurality of solar panels (502, 504, 506) in a vertically stacked position.

FIG. 5

**Description**

**TECHNICAL FIELD**

The present disclosure relates generally to renewable energy and, more particularly to, a solar panel arrangement.

**BACKGROUND**

Conventionally, for centuries non-renewable energy sources such as fossil fuels have been a primary source of energy to meet the energy requirements of humans. However, such non-renewable energy sources are unable to meet an ever increasing demand of energy, and thus are depleting at unprecedented rates. With advancements in energy technologies, renewable energy sources have emerged as a promising alternative. For example, with developments in the photovoltaic technologies, solar energy has evolved as one primary source of renewable energy. Typically, solar photovoltaic panels or solar panels are used to convert the solar power into electrical energy.

Generally, solar panel arrangements are being used or implemented as flat installations, i.e. roof top solar panel arrangements, ground solar panel arrangements, water solar panel arrangements, and so forth. Another possible arrangement of the solar panels may be achieved in the form of a solar panel tree arrangement or a solar panel flower arrangement, which include multiple branches spreading along multiple directions. However, such conventional solar panel arrangements suffer from various problems. Typically, such solar panel arrangements need a large horizontal footprint (or space or area) for the setup thereof. Therefore, such setup of the solar panel arrangements requires vast expanse of land to commercially generate electrical energy. Further, the setup (or installation) of such solar panel arrangements may take days or months. Furthermore, due to the large setup space the process of inspecting, cleaning and replacing individual solar panels becomes very cumbersome and time consuming. Moreover, the solar panel arrangements are mostly fixed, i.e. not designed or configured to be mobile or portable. Additionally, the solar panel arrangements are not very aesthetic; and not very suitable for temporary applications like disaster relief and so forth. Also, the solar panel arrangements typically require experience professional for the maintenance thereof. Finally, the conventional solar panel arrangements are not configured or designed to harness full potential of solar power received based on geographical attributes of a place where the solar panel arrangements are setup or installed.

In light of the foregoing discussion, there exists a need to overcome the aforementioned drawbacks of conventional solar panel arrangements.

**SUMMARY**

Various embodiments of the present disclosure provide solar panel arrangements.

In an embodiment, a solar panel arrangement is disclosed. The solar panel arrangement comprises a plurality of solar panels operable to be stacked vertically. Each solar panel of the plurality of solar panels is vertically spaced apart from each adjacent solar panel by a predetermined distance. The predetermined distance is based on a solar elevation angle to be incident on the plurality of solar panels and lengths of the each solar panel of the plurality of solar panels. The solar panel arrangement further comprises a coupling mechanism operable to support the plurality of solar panels in a vertically stacked position.

Other aspects and example embodiments are provided in the drawings and the detailed description that follows.

**BRIEF DESCRIPTION OF THE FIGURES**

For a more complete understanding of example embodiments of the present technology, reference is now made to the following descriptions taken in connection with the accompanying drawings in which:

> FIG. 1 is a block diagram depicting implementation of a solar panel arrangements, in accordance with an example embodiment;
> FIGs. 2, 3 and 4 are schematic views representing solar elevation angle measurement with respect to a particular geographical location, in accordance with an example embodiment,
> FIG. 5 is a schematic view of a solar panel arrangement, in accordance with an example embodiment;
> FIG. 6 is a schematic side view of solar panels of the solar panel arrangement of FIG. 5 depicting measurement of a predetermined distance between each adjacent solar panels, in accordance with an example embodiment;
> FIGs. 7, 8, 9, 10 are schematic views of solar panel arrangements, in accordance with various example embodiments; and
> FIGs. 11, 12, 13, 14, 15, 16, 17, 18, 19 are schematic views of solar panel arrangements in utilized states, in accordance with various example embodiments.

The drawings referred to in this description are not to be understood as being drawn to scale except if specifically noted, and such drawings are only exemplary in nature.

**DETAILED DESCRIPTION**

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearance of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

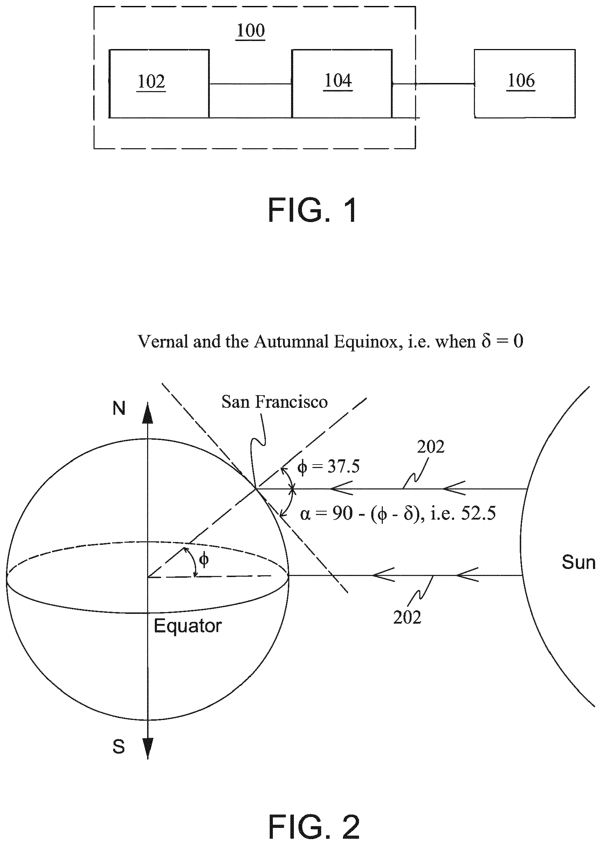

Referring now to the drawings, FIG. 1 is a block diagram depicting implementation of a solar panel arrangement 100, in accordance with an example embodiment. The solar panel arrangement 100 includes a plurality of solar panels 102. The solar panel arrangement 100 may further include an electrical energy storage device 104 electrically connected to the plurality of solar panels 102 for storing electrical energy generated by the plurality of solar panels 102. In an example, the electrical energy storage device 104 includes at least one battery, such as a lithium ion battery, a nickel cadmium battery, and so forth. In one embodiment, the plurality of solar panels 102 is operable to be electrically connected to a grid 106 for supplying electrical energy generated by the plurality of solar panels 102 to the grid 106. As shown, the electrical energy storage device 104 is electrically connected to the grid 106; however, it may be evident that the plurality of solar panels 102 may be directly electrically connected to the grid 106 for supplying the electrical energy generated by the plurality of solar panels 102 to the grid 106.

According to an embodiment, each of the plurality of solar panels 102 is one of: a rigid, a foldable and a flexible solar panel. The each of the plurality of solar panels 102 includes a single solar cell, or a solar cell array configured for transforming solar energy into electric energy. For example, the solar cells may include wafer-based solar cells, thin film solar cells, organic solar cells and so forth. The each of the plurality of solar panels 102 also includes an outer cover or a body for supporting such solar cell(s) thereon and to provide at least one of a rigid, a foldable or a flexible nature to the solar panel.

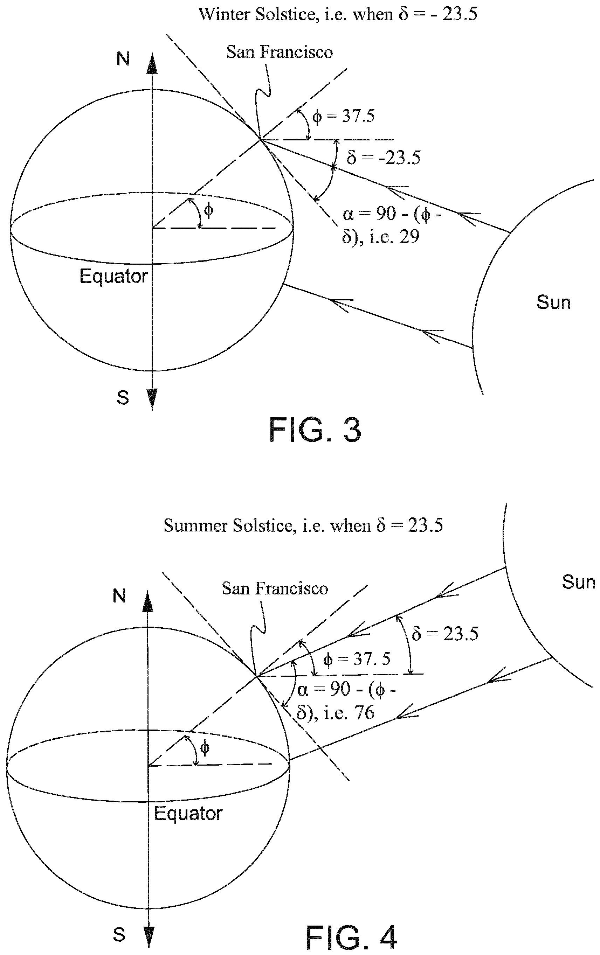

Referring now to, FIGs. 2-4 illustrated are schematic views representing solar elevation angle measurement with respect to a particular geographical location, in accordance with an example embodiment. Specifically, FIGs. 2-4 depict solar elevation angle measurement of San Francisco during vernal and autumnal equinox, winter solstice, and summer solstice, respectively. The solar elevation angle '$\alpha$' is measured using following equation:

$$\alpha = 90 - (\phi - \delta)$$

wherein $\phi$ is latitude of the geographical location (i.e. San Francisco), and

$\delta$ is sun declination angle.

It will be appreciated that during the vernal and autumnal equinox the sun declination angle '$\delta$' is zero, as the center of the Earth lies in the plane of the Sun. Further, the latitude of San Francisco is 37.5 degrees, therefore, the solar elevation angle '$\alpha$' at San Francisco during the vernal and autumnal equinox would be 52.5 degrees. Specifically, during the vernal and autumnal equinox sun rays 202 are incident at San Francisco at angle 52.5 degrees. Similarly, during the winter solstice and summer solstice, the solar elevation angle $\alpha$ at San Francisco would be 29 degrees and 76 degrees, respectively, as during the winter solstice and the summer solstice the sun declination angle '$\delta$' is -23.5 degrees and 23.5 degrees, respectively.

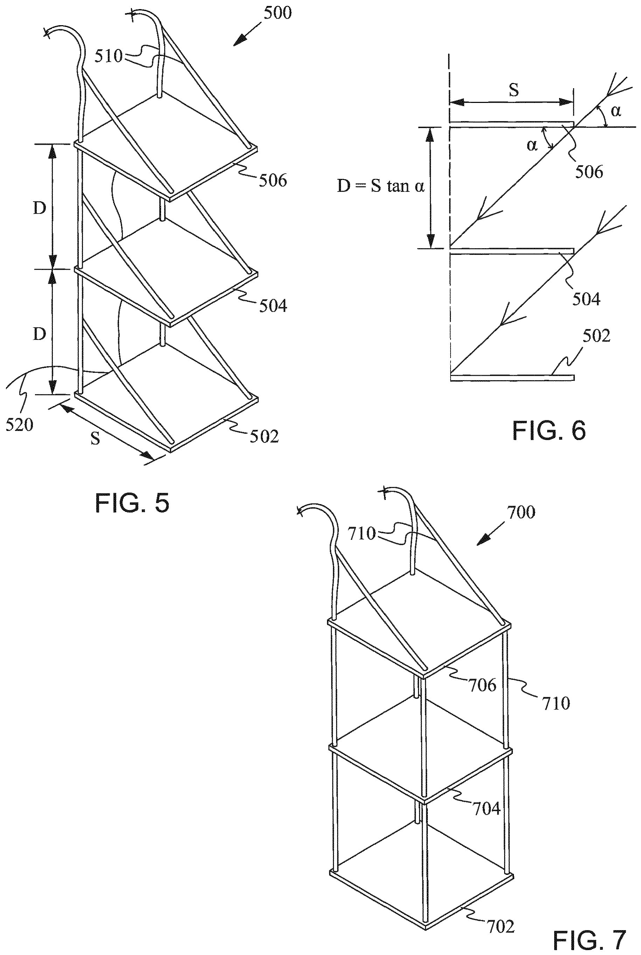

FIG. 5 illustrates a schematic view of a solar panel arrangement 500, in accordance with an example embodiment. As shown, the solar panel arrangement 500 includes a plurality of solar panels, such as three solar panels 502, 504, 506, operable to be stacked vertically. It will be appreciated that solar panel arrangement 500 may include two solar panels or more than three solar panels. Further, each solar panel of the plurality of solar panels 502-506 is vertically spaced apart from each adjacent solar panel by a predetermined distance D. For example, as shown, the solar panel 504 is vertically spaced apart from each adjacent solar panels 502, 506 by the predetermined distance D. In other words, the solar panel 502 is vertically spaced apart from the solar panel 504 by the predetermined distance D, and similarly the solar panel 504 is vertically spaced apart from the solar panel 506 by the predetermined distance D. The predetermined distance D is based on a solar elevation angle to be incident on the plurality of solar panels 502-506, i.e. the predetermined distance D is based on the solar elevation angle of the geographical location having the solar panel arrangement 500 installed or setup therein. The predetermined distance D is also based on lengths of each of the plurality of solar panels 502, 506.

The solar panel arrangement 500 also includes a coupling mechanism 510 operable to support the plurality of solar panels 502-506 in a vertically stacked position. The term 'vertically stacked position' used herein means arrangement or positioning of the plurality of solar panels 502-506 in a direction substantially perpendicular to an earth's surface supporting the solar panel arrangement 500. The term 'substantially perpendicular' used herein means that an inclination (or angle) between perpendicular axes of each solar panel and earth's surface is dimensionally within $\pm 10$ degrees, more preferably within $\pm 5$ degrees. In another embodiment, the term 'vertically stacked position' also includes arrangement of a plurality of solar panels in a direction inclined to the earth's surface supporting (or being supported upon with) a solar panel arrangement. In the present embodiment, the coupling mechanism 510 uses ropes or cables. The use of ropes or cables as coupling mechanism 510 allows the solar panel arrangement 500 to be foldable in nature. In another embodiment, the coupling mechanism 510 may include mechanical links that may be rigid (inflexible) in nature.

The solar panel arrangement 500 also includes electrical and electronic elements, such as wires, circuitries and so forth, for electrically connecting the plurality of solar panels 502-506 to each other and to further electrically connect the plurality of solar panels 502-506 to a battery and/or a grid (as explained in FIG. 1). For example, as shown, the plurality of solar panels 502-506 are electrically connected to each other using electrical wires 520. Further, it will be appreciated that electrical and/or electronic components like inverter, AC and DC plugs and so forth, may be also used in conjunction with the electrical wires 520 for electrically connecting the solar panel arrangement 500 to the battery. It will be appreciated that the plurality of solar panels 502-506 are connected in series or in parallel or series and parallel to get the appropriate current and voltage depending on the application of the solar panel arrangement 500.

In the present embodiment, as shown in FIG. 5, each solar panel of the plurality of solar panels 502-506 is substantially parallel to each adjacent solar panel. As shown, the solar panel 502 is substantially parallel to the solar panel 504, and the solar panel 504 is substantially parallel to the solar panel 506. The term 'substantially parallel' used herein means that an inclination (or angle) between longitudinal panels of each adjacent solar panels is dimensionally within $\pm 20$ degrees, more preferably within $\pm 10$ degrees. Further, each of the plurality of solar panels 502-506 includes a uniform length S.

In the present embodiment, with respect to FIG. 5, the predetermined distance D (i.e. between each adjacent solar panels) is measured using following equation:

$$D = S * \tan\alpha,$$

wherein S is the length of the solar panel, and $\alpha$ is the solar elevation angle.

Based on above equation the predetermined distance D between each adjacent solar panels of the solar panel arrangement 500 at San Francisco during the vernal and autumnal equinox, the winter solstice and the summer solstice, as follows:

    D = S * tan 52.5 = S * 1.30;
    D = S * tan 29 = S * 0.55; and
    D= S * tan 76= S * 4.01.

Therefore, for the above equations if we consider S to be 1 meter, then the predetermined distance D between each adjacent solar panels of the solar panel arrangement 500 at San Francisco during the vernal and autumnal equinox, the winter solstice and the summer solstice would be 1.03 meters, 0.55 meters and 4.01 meters, respectively. Accordingly, for the solar panel arrangement 500 having the plurality of solar panels 502-506 of uniform length of 1 meter the predetermined distance D ranges from 0.55 meters to 4.01meters.

Referring now to FIG. 6, illustrated is a schematic side view of the plurality of solar panels 502-506 of the solar panel arrangement 500 of FIG. 5 depicting measurement of a predetermined distance D between each adjacent solar panels, in accordance with an example embodiment. It will be apparent from the FIG. 6 that if the predetermined distance D would be at least 4.01 meters for the solar panel arrangement 500 installed at San Francisco, when each of the plurality of solar panels 502-506 is having a length of 1 meter, then no solar panel of the plurality of solar panels 502-506 will cast shadow on adjacent solar panel(s). Therefore, for the present disclosure, it will be appreciated that the predetermined distance D would be preferably a 'maximum predetermined distance' measured between solar panels, such as the solar panels 502-506, during the summer solstice when the solar elevation angle $\alpha$ is maximum. Also, as shown, the predetermined distance D between each adjacent solar panels would be uniform, i.e. about 4.01meters. It will be appreciated that the predetermined distance D should be at least the maximum predetermined distance measured between solar panels, such as the solar panels 502-506. In other words, the predetermined distance D may include any distance more than or equal to the maximum predetermined distance measured between the solar panels, such that adjacent solar panel(s) does not cast shadow thereupon. Therefore, with respect to the above example, the predetermined distance D may include any distance more than or equal 4.01 meters.

Referring now to FIG. 7, illustrated is a schematic view of a solar panel arrangement 700, in accordance with an example embodiment. The solar panel arrangement 700 is substantially similar to the solar panel arrangement 500 of FIG. 5. For example, the solar panel arrangement 700 includes a plurality of solar panels, such as solar panels 702, 704, 706. Also, the solar panel arrangement 700 includes a coupling mechanism 710 operable to support the plurality of solar panels 702-706 in a vertically stacked position. However, the coupling mechanism 710 the solar panel arrangement 700 is structurally different from the coupling mechanism 510 the solar panel arrangement 500. It will be appreciated that solar panel arrangements of the present disclosure, such as the solar panel arrangements 500, 700, may include different coupling mechanism. For example, a coupling mechanism for the solar panel arrangements of the present disclosure may include one of a rope and pulley arrangement, a foldable link arrangement and a movable belt arrangement, which will be explained in greater detail herein later.

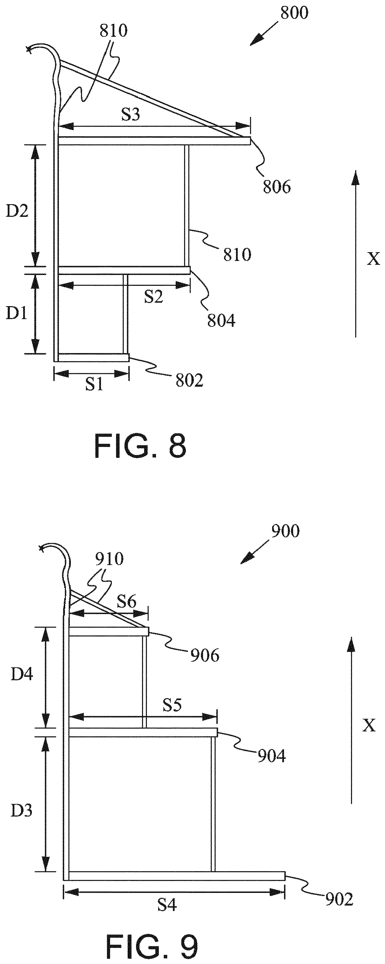

Referring now to FIG. 8-10, illustrated are schematic views of solar panel arrangements including solar panels having non-uniform lengths, in accordance with various example embodiments. As shown, FIG. 8 is a schematic side view of a solar panel arrangement 800 having a plurality of solar panels, such as solar panels 802, 804, 806. The solar panel arrangement 800 also includes a coupling mechanism 810 operable to support the plurality of solar panels 802-806 in a vertically stacked position. Each solar panel of the plurality of solar panels 802-806 is substantially parallel to each adjacent solar panel, and each of the plurality of solar panels 802-806 includes a non-uniform length. As shown, in the present embodiment, lengths of the plurality of solar panels 802-806 increase along a vertically upward direction (represented with an arrow X) of the vertically stacked plurality of solar panels 802-806. Further, the predetermined distances between adjacent solar panels of the plurality of solar panels 802-806 increase (D2>D1) along the vertically upward direction X, which will be explained in greater detail herein subsequently.

As explained above, each of the plurality of solar panels 802-806 includes a non-uniform length. In the present embodiment, with respect to FIG. 8, the plurality of solar panels includes at least a first solar panel (such as the solar panel 802), a second solar panel (such as the solar panel 802) longer than the first solar panel 802 and vertically spaced apart from the first solar panel 802 along the vertically upward direction X, and a third solar panel (such as the solar panel 806) longer than the second solar panel 804 and vertically spaced apart from the second solar panel 804 along the vertically upward direction X. For example, the second solar panel 804 includes a length S2 longer than a length S1 of the first solar panel 802, and a third solar panel 806 includes a length S3 longer than the length S2 of the second solar panel 804. Further, the lengths S1, S2 and S3 increase along the vertically upward direction X. Also, as explained above, the predetermined distances between adjacent solar panels of the plurality of solar panels 802-806 increase along the vertically upward direction X. For example, the predetermined distances D1 between the first and second solar panels 802-804, and D2 between the second and third solar panels 804-806 increase along the vertically upward direction X, i.e. the predetermined distance D2 is more than the predetermined distance D1.

In the present embodiment, with respect to FIG. 8, the predetermined distances D1 between the first and second solar panels 802-804, and D2 between the second and third solar panels 804-806 are measured using following equations, respectively:

$$D1 = S2 \tan a, \text{ and}$$
$$D2 = S3 \tan a,$$

wherein S2 is the length of the second solar panel 804,
S3 is the length of the third solar panel 806, and
$\alpha$ is the solar elevation angle.

It will be appreciated that for the solar panel arrangement 800, the predetermined distances (such as the predetermined distances D1 and D2) would be preferably the 'maximum predetermined distances' measured between solar panels, such as the first and second solar panels 802-804 and the second and third solar panels 804-806, during the summer solstice when the solar elevation angle $\alpha$ is maximum. Accordingly, no solar panel of the plurality of solar panels 802-806 will cast shadow on adjacent solar panel(s). Further, it will be apparent that a solar panel arrangement of the present disclosure, such as the solar panel arrangement 800, may be configured to have more or less than three solar panels 802-806 (i.e. two or five solar panels), and predetermined distances between such adjacent solar panels may be measured (or calculated) based on the aforesaid description.

Referring now to FIG. 9, illustrated is a schematic view of a solar panel arrangement 900 including solar panels having non-uniform lengths, in accordance with an example embodiment. As shown, the solar panel arrangement 900 includes a plurality of solar panels, such as solar panels 902, 904, 906, and a coupling mechanism 910 operable to support the plurality of solar panels 902-906 in a vertically stacked position. The lengths of the plurality of solar panels 902-906 decrease along the vertically upward direction X. For example, the plurality of solar panels of the solar panel arrangement 900 includes at least a fourth solar panel (such as the solar panel 902), a fifth solar panel (such as the solar panel 904) shorter than the fourth solar panel 902 and vertically spaced apart from the fourth solar panel 902 along the vertically upward direction X, and a sixth solar panel (such as the solar panel 906) shorter than the fifth solar panel (such as the solar panel 904) and vertically spaced apart from the fifth solar panel (such as the solar panel 904) along the vertically upward direction X. As shown, the fifth solar panel 904 includes a length S5 shorter than a length S4 of the fourth solar panel 902, and the sixth solar panel 906 includes a length S6 shorter than the length S4 of the fourth solar panel 902. Further, the lengths S4, S5 and S6 decrease along the vertically upward direction X. Moreover, as shown, the predetermined distances between adjacent solar panels of the plurality of solar panels 902-906 decrease along the vertically upward direction X. For example, the predetermined distances D3 between the fourth and fifth solar panels 902-904, and D4 between the fifth and sixth solar panels 904-906 decreases along the vertically upward direction X, i.e. the predetermined distance D4 is less than the predetermined distance D3.

In the present embodiment, with respect to FIG. 9, the predetermined distances D3 between the fourth and fifth solar panels 902-904, and D4 between the fifth and sixth solar panels 904-906 are measured using following equations, respectively:

D3 = S5 tana, and
D4 = S6 tana,
wherein S5 is the length of the fifth solar panel 904, S6 is the length of the sixth solar panel 906, and α is the solar elevation angle.

It will be appreciated that for the solar panel arrangement 900, the predetermined distances (such as the predetermined distances D3 and D4) would be preferably the 'maximum predetermined distances' measured between solar panels, such as the fourth and fifth solar panels 902-904 and the fifth and sixth solar panels 904-906, during the summer solstice when the solar elevation angle α is maximum. Accordingly, no solar panel of the plurality of solar panels 902-906 will cast shadow on adjacent solar panel(s). Further, it will be apparent that a solar panel arrangement of the present disclosure, such as the solar panel arrangement 900, may be configured to have more or less than three solar panels 902-906, and predetermined distances between such adjacent solar panels may be measured (or calculated) based on the aforesaid description.

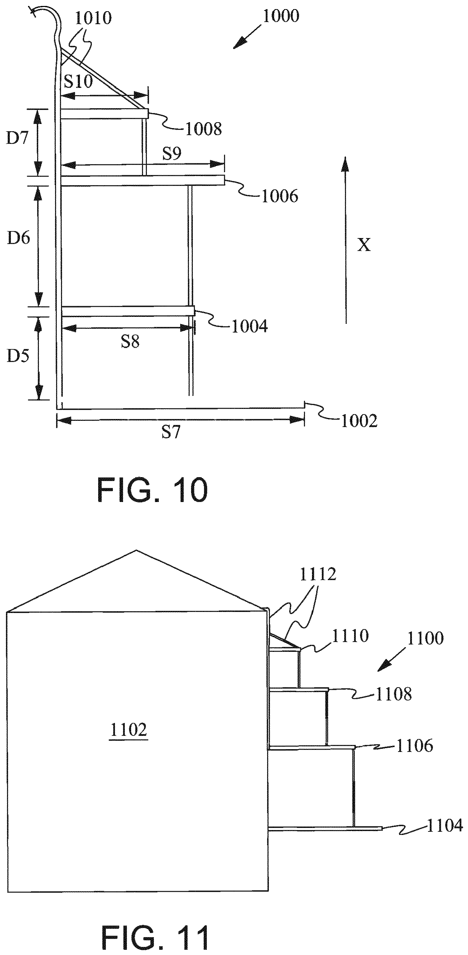

Referring now to FIG. 10, illustrated is a schematic view of a solar panel arrangement 1000 including solar panels having non-uniform lengths, in accordance with an example embodiment. As shown, the solar panel arrangement 1000 includes a plurality of solar panels, such as solar panels 1002, 1004, 1006, 1008, and a coupling mechanism 1010 operable to support the plurality of solar panels 1002-1008 in a vertically stacked position. In the present embodiment, each of the plurality of solar panels 1002-1008 includes a non-uniform length, and lengths of the plurality of solar panels 1002-1008 is random along the vertically upward direction X. For example, a length S8 of the solar panel 1004 is shorter than a length S7 of the solar panel 1002, a length S9 of the solar panel 1006 is longer than the length S8 of the solar panel 1004 but shorter than the length S7 of the solar panel 1002, and a length S10 of the solar panel 1008 is shorter than the length S9 of the solar panel 1006.

In the present embodiment, with respect to FIG. 10, the predetermined distances D5 between the solar panels 1002-1004, D6 between the solar panels 1004-1006, and D7 between the solar panels 1006-1008 are measured using following equations, respectively:

D5 = S8 tana,
D6 = S9 tana, and
D7 = S10 tanα
wherein S8, S9 and S10 are the lengths of the solar panels 1004, 1006, 1008, respectively,
and
α is the solar elevation angle.

It will be appreciated that for the solar panel arrangement 1000, the predetermined distances (such as the predetermined distances D5, D6 and D7) would be preferably the 'maximum predetermined distances' measured between solar panels, such as the solar panels 1002-1004, the solar panels 1004-1006 and the solar panels 1006-1008, during the summer solstice when the solar elevation angle α is maximum. Accordingly, no solar panel of the plurality of solar panels 1002-1008 will cast shadow on adjacent solar panel(s). Further, it will be apparent that a solar panel arrangement of the present disclosure, such as the solar panel arrangement 1000, may be configured to have more than four solar panels 1002-1008, and predetermined distances between such adjacent solar panels may be measured (or calculated) based on the aforesaid description.

FIGs. 11-17 are schematic views of solar panel arrangements in utilized states, in accordance with various example embodiments. Specifically, a coupling mechanism of such solar panel arrangements is operable to support the plurality of solar panels thereof in a vertically stacked position on one of an immovable structure or a movable thing, which will be explained in greater detail herein later.

According to an embodiment of the present disclosure, the immovable structure includes a structure made of concrete, metal, wood, plastic or any combination thereof. For example, as shown in FIG. 11, a solar panel arrangement 1100 is mounted on a building 1102. It will be appreciated that the solar panel arrangement 1100 may be structurally and functionally similar to any of the solar panel arrangements (explained in conjunction with FIGs. 5 to 10). The solar panel arrangement 1100 includes a plurality of solar panels 1104, 1106, 1108 and 1110, and a coupling mechanism 1112 operable to support the plurality of solar panels 1104-1110 in a vertically stacked position on the building 1102. The coupling mechanism 1112 includes ropes or cables. It will be apparent that solar panel arrangement 1100 may be mounted or supported on a planar surface of the building 1100 without any projection or protrusions, such as ledges, balconies and the like. In another embodiment, the solar panel arrangement 1100 may be utilized as fixed ledge or balcony, i.e. the plurality of solar panels 1104-1110 may be attached to sides of the building 1100 as a ledges or balconies with a required vertical separation therebetween. The building 1102 may be an existing building or may be a new building constructed for utilizing solar panel arrangements, such as the solar panel arrangement 1100, for generating electrical power. In one example, the electrical energy generated by the solar panel arrangement 1100 may be stored in a battery for being used in the building 1102.

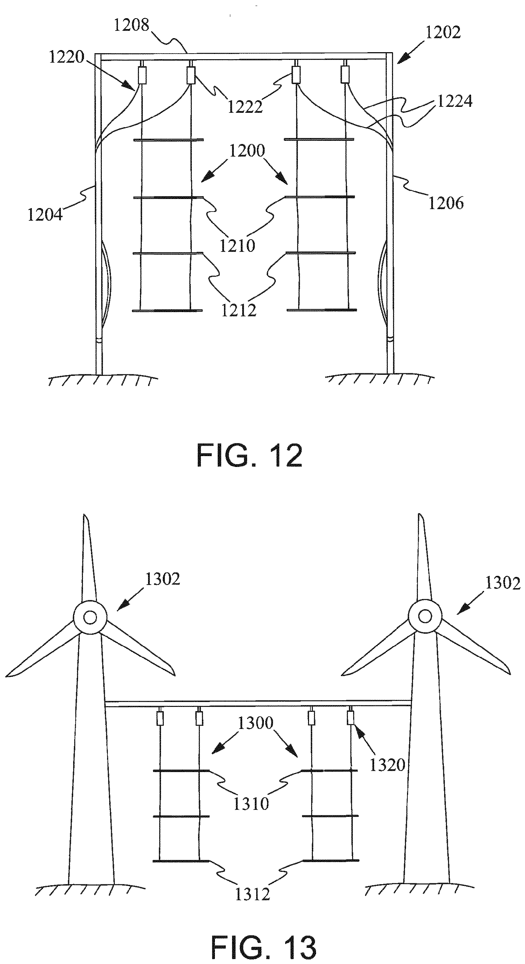

Referring now to FIG. 12, solar panel arrangements 1200 is shown in a utilized state in conjunction with an immovable frame structure 1202. As shown, the frame structure 1202 includes a pair of vertical members 1204, 1206 supported on earth (or soil) and a horizontal member 1208 coupled to ends of the vertical members 1204, 1206. Therefore, the frame structure 1202 enables in supporting (i.e. hanging) the solar panel arrangements 1200 in a vertically stacked position. It will be appreciated that the solar panel arrangements 1200 may be structurally and functionally similar to any of the solar panel arrangements (explained in conjunction with FIGs. 5 to 10). As shown, the solar panel arrangements 1200 includes a plurality of solar panels, such as solar panels 1210, 1212, and a coupling mechanism 1220 operable to support the plurality of solar panels 1210, 1212 in the vertically stacked position on the frame structure 1202. In the present embodiment, the coupling mechanism 1220 includes a rope and pulley arrangement, i.e. ropes 1224 and pulleys 1222 operatively coupled to the ropes 1224. The ropes 1224 and pulleys 1222 enable in moving (i.e. lowering and raising) the plurality of solar panels 1210-1216 for inspection, maintenance and replacement purposes. It will be appreciated that the electrical energy generated by the solar panel arrangements 1200 may be stored in a battery or fed into a grid.

Referring now to FIG. 13, solar panel arrangements 1300 is shown in a utilized state in conjunction with wind turbine towers 1302. The wind turbine towers 1302 enable in supporting (i.e. hanging) the solar panel arrangements 1300 in a vertically stacked position. It will be appreciated that the solar panel arrangement 1300 may be structurally and functionally similar to a solar panel arrangement explained in conjunction with FIG. 12. As shown, the solar panel arrangements 1300 includes a plurality of solar panels, such as solar panels 1310, 1312, and a coupling mechanism 1320, such as a rope and pulley arrangement, operable to support the plurality of solar panels 1310, 1312 in the vertically stacked position on the wind turbine towers 1302. It will be appreciated that the electrical energy generated by the solar panel arrangements 1300 may be combined along with the electrical energy generated by the wind turbine and fed into a grid. The present embodiment as shown and explained in conjunction with FIG. 13 may act as a dual renewal energy generating arrangement.

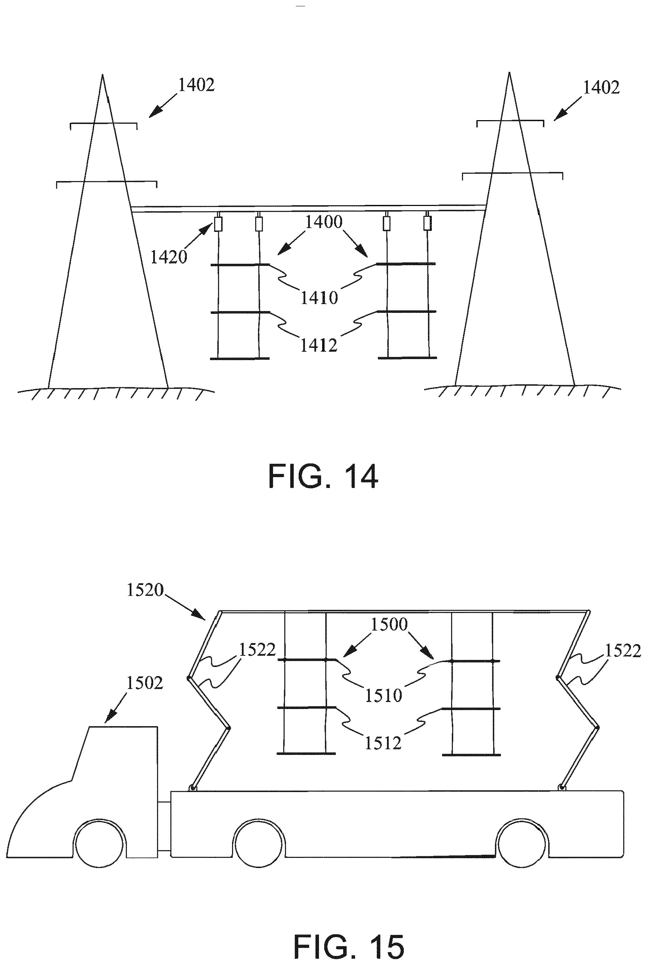

Referring now to FIG. 14, solar panel arrangements 1400 is shown in a utilized state in conjunction with pylons 1402. The pylons 1402 enable in supporting (i.e. hanging) the solar panel arrangements 1400 in a vertically stacked position. It will be appreciated that the solar panel arrangements 1400 may be structurally and functionally similar to a solar panel arrangement explained in conjunction with FIG. 12. As shown, the solar panel arrangements 1400 includes a plurality of solar panels, such as solar panels 1410, 1412, and a coupling mechanism 1420, such as a rope and pulley arrangement, operable to support the plurality of solar panels 1410, 1412 in the vertically stacked position on the pylons 1402. It will be appreciated that the electrical energy generated by the solar panel arrangements 1400 may be fed into a grid operatively associated with the pylons 1402. It may be evident that in one embodiment the solar panel arrangements 1400 may be configured within the pylons 1402, i.e. the plurality of solar panels 1410, 1412 are configured to hang in the vertically stacked position from within the pylons 1402. In other words, the solar panel arrangements 1400 instead on being supported between the pylons 1402 using the coupling mechanism 1420, are configured to hang from within the pylons 1402 (hollow frame or structure) using a coupling mechanism.

As mentioned above, a coupling mechanism in a solar panel arrangement is operable to support the plurality of solar panels thereof in a vertically stacked position on a movable thing. According to an embodiment, the movable thing includes one of: land, water and air transportation means. As shown in FIG. 15, solar panel arrangements 1500 in a utilized state in conjunction with a trailer 1502. The solar panel arrangements 1500 include a plurality of solar panels, such as solar panels 1510, 1512 mounted or supported on the trailer 1502 using a coupling mechanism 1520. As shown, the coupling mechanism 1520 includes movable (or foldable) links 1522 operatively coupled to each other to form a movable structure for supporting (or hanging) the plurality of solar panels 1510, 1512 in a vertically stacked position thereof. The coupling mechanism 1520 enable in moving (i.e. lowering and raising) the plurality of solar panels 1510, 1512 for inspection, maintenance and replacement purposes. In an example, the movable links 1522 may be operated using an electrical motor, gears, and the like for lowering and raising the plurality of solar panels 1510, 1512. In another embodiment, the movable links 1522 may include hydraulic cylinders (mechanical actuator) that are hydraulically or fluidically powered or operated for lowering and raising the plurality of solar panels 1510, 1512.

According to an embodiment, the solar panel arrangements 1500 may be mounted or supported on the trailer 1502 using a coupling mechanism, i.e. a movable belt arrangement, for example, a motorized track or elevator system, such that the solar panels 1510, 1512 may be moved for inspection, maintenance and replacement. Also, the motorized tracks may be used to move the solar panels 1510, 1512 to track sun rays as the sun moves from one side to the other side with respect to the movable thing, such as land, water and air transportation means.

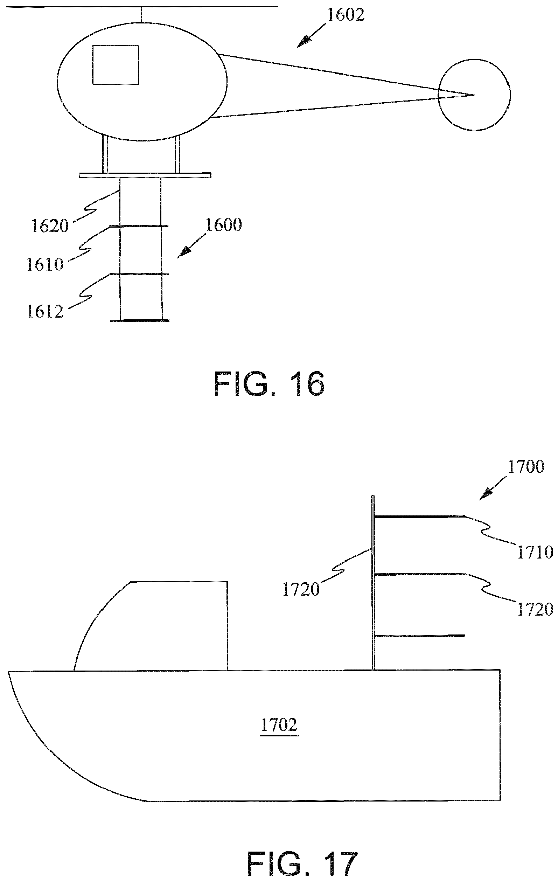

Referring now FIGs. 16 and 17, a solar panel arrangement, such as solar panel arrangements 1600 and 1700, are shown in a utilized state in conjunction with a helicopter 1602 and a boat 1702, respectively. It will be appreciated that the solar panel arrangements 1600, 1700 may be structurally and functionally similar to any of the solar panel arrangements (explained in conjunction with FIGs. 5 to 10). For example, the solar panel arrangement 1600 includes a plurality of solar panels, such as solar panels 1610, 1612, mounted or supported on the helicopter 1602 using a coupling mechanism 1620. Similarly, the solar panel arrangement 1700 includes a plurality of solar panels, such as solar panels 1710, 1712, mounted or supported on the boat 1702 using a coupling mechanism 1720.

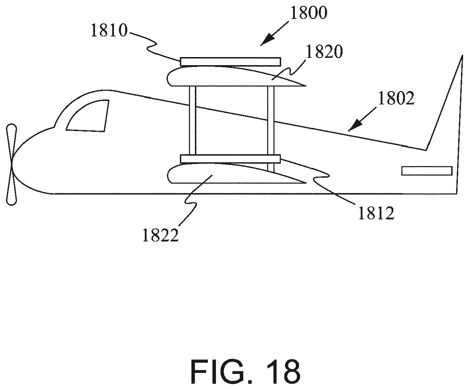

Referring now FIG. 18, a solar panel arrangement, such as a solar panel arrangement 1800, is shown in a utilized state in conjunction with an airplane 1802. The airplane 1802 may be a manned or an unmanned air vehicle. The solar panel arrangement 1800 includes a plurality of solar panels, such as solar panels 1810, 1812, mounted or supported on the airplane 1802. In the present embodiment, the solar panels 1810, 1812 are arranged on wings 1820, 1822, respectively. In such instance, the solar panels 1810, 1812 may be mounted on the wings 1820, 1822 using a coupling mechanism (not shown), such as adhesive, mechanical links and the like. It may be appreciated that the airplane 1802 shown herein may be a Biplane; however, it may be evident that the airplane 1802 may be a Monoplane. In such instance, the airplane 1802 (Monoplane) may be arranged with any one of the solar panel arrangements 500, 700. 800, 900, 1000, explained herein above.

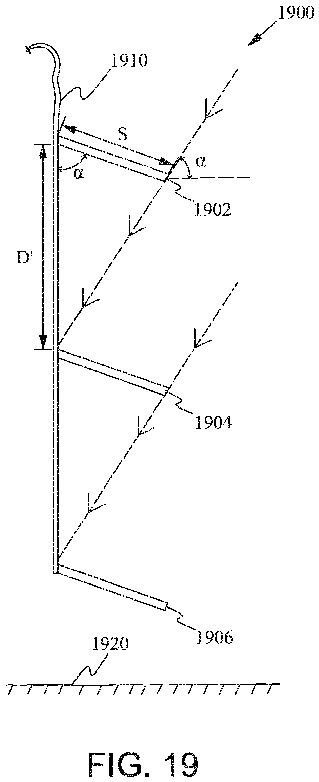

Referring now to FIG. 19, illustrated is a solar panel arrangement 1900, in accordance with another example embodiment. As mentioned above, the term 'vertically stacked position' also includes arrangement of a plurality of solar panels in a direction inclined to the earth's surface supporting (or being supported upon with) a solar panel arrangement. The solar panel arrangement 1900 includes a plurality of solar panels 1902, 1904, 1906, and a coupling mechanism 1910 operable to support the plurality of solar panels 1902-1906 in a vertically stacked position. As shown, the plurality of solar panels 1902-1906 is arranged in a direction inclined to an earth's surface 1920, upon which the solar panel arrangement 1900 is supported. Further, the each solar panel of the plurality of solar panels 1902-1906 is substantially parallel to each adjacent solar panel. For example, the solar panel 1902 is parallel to the solar panel 1904, and the solar panel 1904 is parallel to the solar panel 1906. Also, the plurality of solar panels 1902-1906 are inclined to the earth's surface 1920, instead of being perpendicular to the earth's surface 1920 like the solar panel arrangements 500, 700. 800, 900, 1000, explained herein above.

Each solar panel of the plurality of solar panels 1902-1906 is vertically spaced apart from each adjacent solar panel by a predetermined distance D', and the predetermined distance D' is based on a solar elevation angle to be incident on the plurality of solar panels 1902-1906, and lengths of each solar panel of the plurality of solar panels 1902-1906. As shown, in the present embodiment, each of the plurality of solar panels 1902-1906 includes a uniform length S. In such instance, the predetermined distance D' is measured using following equation:

$$D' = S \operatorname{Sec}\alpha,$$

wherein S is the length of one of the solar panels 1902-1906, and
$\alpha$ is the solar elevation angle.

Therefore, as shown in FIG. 19, in an example, if the solar elevation angle $\alpha$ is about 75 degrees, the predetermined distance would be:
D' = S Sec75.
As shown, it may be appreciated that, the solar panels 1902-1906 are inclined at about 15 degrees to the earth's surface 1920, and the solar panels 1902-1906 are subjected to the solar elevation angle of about 75 degrees, therefore a resultant solar elevation angle for the solar panels 1902-1906 becomes 90 degrees. This causes the solar panels 1902-1906 to be perpendicular to the sunrays, which further enables in improving or enhancing efficiency of the solar panel arrangement 1900 for the generation of electrical energy from solar energy. In an embodiment, a movable angle bracket, a gear and motor arrangement, and the like (not shown) may be used in conjunction with the coupling mechanism 1910 to provide desired inclination to the solar panels 1902-1906 with respect to the earth's surface 1920.

In addition to above, the solar panel arrangements may be used in a hoisted manner. For example, solar panel arrangements may be hoisted up and often attached to a top of a fixed structures like towers, buildings, temporary scaffolding, cable strung across the tops of buildings, tall trees, industrial wind turbines, power distribution towers, towers (like a clothes line), using pulleys, winches, cranes, helicopters and other mechanical means. Further, the solar panel arrangements may be hoisted up using mobile cranes, scissor lifts and other mechanical/pneumatic means. The vehicle transporting the panel assembly will have the hoisting mechanism as well. e.g., semi-truck-trailer will have a scissor lift or mechanical means to hoist the panel assembly once the trailer is parked at a particular destination. Furthermore, the solar panel arrangements may be hoisted up using helium balloons, hot air balloons (heated with fuel or solar heated), drones, blimps or parasailing. Optionally, the helium balloons, hot air balloons, hoisting the solar panel arrangements, may be attached to the top of immovable structure or moving thing.

Further, in addition to above, the solar panel arrangements may be used in a dropped down manner. For example, as shown in FIG. 16, the solar panel arrangement may be dropped down from a helicopter. Further, the solar panel arrangements may be dropped down from blimps like Airlander 10, for example, for disaster recovery operations in remote areas. Furthermore, the solar panel arrangements may be dropped down from tops of buildings, bridges, power transmission towers. Additionally, the solar panel arrangements may be dropped down from tops of canyons, gorges, and other natural deep structures. Moreover, in addition to above, the solar panel arrangements may be used in conjunction with drone or aircraft. For example, the solar panel arrangements (vertically stacked solar panels) may be fixed on top of the drone or aircraft.

In addition to above the solar panel arrangements of the present may be used for disaster relief operations (especially where there is no power or need for temporary power generations), or for camping or trekking in remote areas. Further, the solar panel arrangements may be used for off the grid living in remote areas or cabins or resorts, and for off the grid charging for electric vehicles, electric power generation in recreational vehicle, vans and the like. Also, the solar panel arrangements may be used for clean energy generation in offshore oil rigs, or power generation for aircraft carriers, container ships, cruise ships and so forth. Additionally, the solar panel arrangements may be used for extending the range of drones and battery-operated aircrafts.

Embodiments of the present disclosure substantially eliminate or at least partially address the aforementioned problems in the background, and provide improved solar panel arrangements. Primarily, the solar panel arrangements of the present disclosure are configured or designed to harness full potential of solar power received round the year based on geographical attributes of a place wherein the solar panel arrangements are setup or installed. Specifically, the solar panels of the solar panel arrangements are vertically stacked such that solar panels do not cast shadow on adjacent solar panel(s) thereby efficiently harnessing full potential of the solar power round the year. According to an embodiment, the use of solar panels in the manner as shown and described in the present disclosure enables in increasing an overall energy generation efficiency for the solar panel arrangements. It may be evident that the overall energy generation efficiency would be based on a number of solar panels used in any particular solar panel arrangement. For example, the overall energy generation efficiency for any solar panel arrangement would increase by one fold (or by one time) for every addition of a solar panel (i.e. stacked vertically) in the solar panel arrangement. The solar panel arrangements of the present disclosure address the problem of horizontal footprint (or space) with the vertical stacking of the solar panels and thereby efficiently using an available vertical footprint or space to a maximum potential. The effectiveness of the solar panel arrangements of the present disclosure is dependent on the latitude of the location. For example, for latitudes > 30 degrees N and S the solar panel arrangements will be effective year round. For locations on both sides of the equator, between the tropic of cancer and the tropic of Capricorn the effectiveness will be limited or seasonal. Some of these limitations can be overcome by building leaning towers and other changes to the basic design. Further, it will be appreciated that while using or installing a plurality of solar panel arrangements horizontally on one place for electricity generation, a horizontal distance between each solar panel arrangement will be based on overall vertical length of adjacent solar panel arrangement(s). Another advantage of the solar panel arrangements of the present disclosure is the design which is more tolerant to wind, for example, since there are vertical separations that act as pathways for the wind to flow therethrough. The solar panel arrangements of the present disclosure are implemented by vertically mounting the solar panels on a track or elevator system, such that the individual solar panel may be lowered or raised vertically by an operator for easy inspection and maintenance. Further, the solar panel arrangements of the present disclosure can be stacked vertically in a compact form for easy transportation thereof. Moreover, the solar panel arrangements of the present disclosure are easy to install and takes substantially less time for the installation or setup thereof.

The embodiments illustrated and described herein as well as embodiments not specifically described herein but within the scope of aspects of the invention constitute exemplary solar panel arrangement.

The benefits and advantages described above may relate to one embodiment or may relate to several embodiments. The embodiments are not limited to those that solve any or all of the stated problems or those that have any or all of the stated benefits and advantages.

The above description is given by way of example only and various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A solar panel arrangement, the solar panel arrangement comprising:

   a plurality of solar panels operable to be stacked vertically, wherein each solar panel of the plurality of solar panels is vertically spaced apart from each adjacent solar panel by a predetermined distance, and wherein the predetermined distance is based on a solar elevation angle to be incident on the plurality of solar panels and lengths of each solar panel of the plurality of solar panels; and

a coupling mechanism operable to support the plurality of solar panels in a vertically stacked position.

2. The solar panel arrangement as claimed in claim 1, wherein the each solar panel of the plurality of solar panels is substantially parallel to each adjacent solar panel, and each of the plurality of solar panels includes a uniform length.

3. The solar panel arrangement as claimed in claim 2, wherein the predetermined distance 'D' is measured using following equation:

$$D = S \tan\alpha,$$

wherein S is the length of the solar panel, and $\alpha$ is the solar elevation angle;

and wherein the solar elevation angle '$\alpha$' is measured using following equation:

$$\alpha = 90 - (\phi - \delta)$$

wherein $\phi$ is latitude of a geographical location having the solar panel arrangement, and $\delta$ is sun declination angle.

4. The solar panel arrangement as claimed in claim 1, wherein the each solar panel of the plurality of solar panels is substantially parallel to each adjacent solar panel, and each of the plurality of solar panels includes a non-uniform length.

5. The solar panel arrangement as claimed in claim 4, wherein lengths of the plurality of solar panels increase along a vertically upward direction of the vertically stacked plurality of solar panels.

6. The solar panel arrangement as claimed in claim 5, wherein the predetermined distances between adjacent solar panels increase along the vertically upward direction.

7. The solar panel arrangement as claimed in claim 6, wherein the plurality of solar panels comprises at least a first solar panel, a second solar panel longer than the first solar panel and vertically spaced apart from the first solar panel along the vertically upward direction, and a third solar panel longer than the second solar panel and vertically spaced apart from the second solar panel along the vertically upward direction.

8. The solar panel arrangement as claimed in claim 7, wherein predetermined distances 'D1' between the first and second solar panels, and 'D2' between the second and third solar panels are measured using following equations, respectively:

D1 = S2 tana, and
D2 = S3 tana,
wherein S2 is the length of the second solar panel,
S3 is the length of the third solar panel, and
$\alpha$ is the solar elevation angle.

9. The solar panel arrangement as claimed in claim 4, wherein lengths of the plurality of solar panels decrease along a vertically upward direction of the vertically stacked plurality of solar panels.

10. The solar panel arrangement as claimed in claim 9, wherein the predetermined distances between adjacent solar panels decrease along the vertically upward direction.

11. The solar panel arrangement as claimed in claim 10, wherein the plurality of solar panels comprises at least a fourth solar panel, a fifth solar panel shorter than the fourth solar panel and vertically spaced apart from the fourth solar panel along the vertically upward direction, and a sixth solar panel shorter than the fifth solar panel and vertically spaced apart from the fifth solar panel along the vertically upward direction;

and wherein predetermined distances 'D3' between the fourth and fifth solar panels, and 'D4' between the fifth and sixth solar panels are measured using following equations, respectively:

D3 = S5 tana, and
D4 = S6 tana,
wherein S5 is the length of the fifth solar panel,
S6 is the length of the sixth solar panel, and
$\alpha$ is the solar elevation angle.

12. The solar panel arrangement as claimed in claim 1, wherein the coupling mechanism is operable to support the plurality of solar panels in the vertically stacked position on one of: an immovable structure or a movable thing;

and wherein the immovable structure includes a structure made of: concrete, metal, wood, plastic or any combination thereof;

and wherein the movable thing includes one of: land, water and air transportation means; and wherein the coupling mechanism is one of: ropes or cables, a rope and pulley arrangement, a foldable link arrangement, and a movable belt arrangement.

13. The solar panel arrangement as claimed in claim 1, further includes an electrical energy storage device electrically connected to the plurality of solar panels for storing electrical energy generated by the plurality of solar panels.

14. The solar panel arrangement as claimed in claim 1, wherein the plurality of solar panels is operable to be electrically connected to a grid for supplying electrical energy generated by the plurality of solar panels to the grid.

15. The solar panel arrangement as claimed in claim 1, wherein each of the plurality of solar panels is one of: a rigid, a foldable and a flexible solar panel.

FIG. 1

Vernal and the Autumnal Equinox, i.e. when $\delta = 0$

N

San Francisco

202

$\phi = 37.5$

$\alpha = 90 - (\phi - \delta)$, i.e. 52.5

Sun

$\phi$

Equator

202

S

FIG. 2

Winter Solstice, i.e. when δ = - 23.5

FIG. 3

Summer Solstice, i.e. when δ = 23.5

FIG. 4

FIG. 5

$$D = S \tan \alpha$$

FIG. 6

FIG. 7

FIG. 8

FIG. 9

FIG. 10

FIG. 11

FIG. 12

FIG. 13

FIG. 14

FIG. 15

18

FIG. 16

FIG. 17

FIG. 18

FIG. 19

Europäisches
Patentamt

European
Patent Office

Office européen
des brevets

## EUROPEAN SEARCH REPORT

Application Number

EP 19 15 4490

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 014244 A1 (SCHOENAU PEER [DE]; SCHOENAU PERCY [DE]) 25 September 2008 (2008-09-25) * figures 1, 2 * * paragraph [0019] * ----- | 1-3,13, 15 | INV. F24S30/20 F24S25/10 |
| X | WO 2017/097772 A1 (BERETTA ANGELO [IT]) 15 June 2017 (2017-06-15) * figures 1, 3, 4 * ----- | 1-11, 13-15 | |
| X | DE 29 53 533 A1 (GARTNER & CO J [DE]) 14 May 1981 (1981-05-14) * figure 1 * ----- | 1-3, 12-15 | |

TECHNICAL FIELDS
SEARCHED      (IPC)

F24S
H02S

The present search report has been drawn up for all claims

| Place of search | Date of completion of the search | Examiner |
|---|---|---|
| The Hague | 29 May 2019 | Fernandez Ambres, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 4490

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2019

| Patent document cited in search report | Publication date | Patent family member(s) | | Publication date |
|---|---|---|---|---|
| DE 102007014244 A1 | 25-09-2008 | NONE | | |
| WO 2017097772 A1 | 15-06-2017 | EP<br>WO | 3387336 A1<br>2017097772 A1 | 17-10-2018<br>15-06-2017 |
| DE 2953533 A1 | 14-05-1981 | NONE | | |

EPO FORM P0459

For more details about this annex : see Official Journal of the European Patent Office, No. 12/82